Europäisches Patentamt

European Patent Office

Office européen des brevets

(11) Veröffentlichungsnummer: **0 127 564**
**B1**

(12) # EUROPÄISCHE PATENTSCHRIFT

(45) Veröffentlichungstag der Patentschrift:
**13.07.88**

(51) Int. Cl.⁴: **C 03 B 40/02**

(21) Anmeldenummer: **84710014.6**

(22) Anmeldetag: **18.04.84**

(54) Einrichtung zur Herstellung von Hohlglaskörpern.

(30) Priorität: **22.04.83 DE 3314584**
**25.04.83 DE 3314960**

(43) Veröffentlichungstag der Anmeldung:
**05.12.84 Patentblatt 84/49**

(45) Bekanntmachung des Hinweises auf die Patenterteilung:
**13.07.88 Patentblatt 88/28**

(84) Benannte Vertragsstaaten:
**AT BE CH DE FR GB IT LI NL SE**

(56) Entgegenhaltungen:
**EP - A - 0 035 145**
**EP - A - 0 043 261**
**US - A - 3 172 606**
**US - A - 3 801 299**

(73) Patentinhaber: **Findag Corporation N.V., Pietermaai 15,**
**Curacao (AN)**

(72) Erfinder: **Renkl, Hans-Dieter, Maienweg 11,**
**D-7901 Bühlenhausen (DE)**
Erfinder: **Waibl, Rudi, Stettiner Strasse 3,**
**D-7908 Niederstotzingen (DE)**

(74) Vertreter: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel**
**Postfach 860820, D-8000 München 86 (DE)**

## Beschreibung

Die Erfindung bezieht sich auf eine Einrichtung zur Herstellung von Hohlglaskörpern. In solchen Einrichtungen ist es notwendig, bestimmte Flächen der Formteile mit einem Schmier- und Trennmittel zu behandeln. Die Einrichtungen haben eine sehr grosse Arbeitsgeschwindigkeit, so dass für die Behandlung mit Schmier- und Trennmittel nur sehr kurze Zeiten zur Verfügung stehen. Ausserdem sind die Unterbringungsmöglichkeiten für Schmier- und Trennmittel abgebende Vorrichtungen sehr beschränkt.

STAND DER TECHNIK

Aus der Europäischen Patentanmeldung 0 043 261 ist eine Einrichtung zur Herstellung von Hohlglaskörpern bekannt. Die entstehenden Hohlglaskörper besitzen eine Achse, einen Hohlglaskörperrumpf und einen Hohlglaskörperhals. Die zur Herstellung dieser Hohlglaskörper dienende Einrichtung umfasst einen Formhohlraum. Dieser Formhohlraum besitzt eine entsprechende Achse und eine innere Formfläche mit einem ersten, dem Hohlglaskörperrumpf entsprechenden Abschnitt und mit einem zweiten, dem Hohlglaskörperhals entsprechenden Abschnitt. Der erste Abschnitt der inneren Formfläche ist von zwei Formhälften gebildet, die in einer Grundstellung mit je einer Formtrennfläche in einer die Achse des Formhohlraums enthaltenden Formtrennebene zusammenstossen. Der zweite Abschnitt der inneren Formfläche ist von zwei Mündungsringhälften gebildet, die in einer Grundstellung mit je einer Mündungsringtrennfläche in einer die Achse des Formhohlraums enthaltenden Mündungsringtrennebene zusammenstossen und mit je einer Mündungsringanschlussfläche in einer zur Achse des Formhohlraums im wesentlichen senkrechten Anschlussebene an Formanschlussflächen der Formhälften anliegen. Die beiden Formhälften definieren an ihren von den Mündungsringhälften abgelegenen Enden eine Einfüllöffnung für einen Glastropfen. Die Einfüllöffnung ist durch einen Verschlusskörper verschliessbar. Zwischen den Mündungsringhälften ist ein Blasdorn einführbar, um den Glastropfen zu einem Hohlglaskörper aufzublasen. Die Formhälften können aus ihrer Grundstellung heraus im wesentlichen senkrecht zu der Formtrennebene voneinander weg in eine Öffnungsstellung bewegt werden, um einen das Entnehmen des jeweiligen Hohlglaskörpers aus dem Formhohlraum gestattenden Spalt zwischen sich zu bilden. Die Mündungsringhälften sind mit dem jeweiligen Hohlglaskörper aus ihrer Grundstellung durch den Spalt hindurch an einen Übergabeort beweglich und an diesem im wesentlichen senkrecht zu der Mündungsringtrennebene voneinander weg in eine Lösestellung beweglich, um den Hohlglaskörper an ihn während seiner Weiterbearbeitung tragende Übernahmemittel abzugeben. Die Mündungsringhälften sind von der Lösestellung und dem Übergabeort durch den Spalt der in Öffnungsstellung befindlichen Formhälften hindurch in ihre Grundstellung zurückführbar. Die Formhälften sind nach der Rückführung der Mündungsringhälften in deren Grundstellung ebenfalls wieder in ihre Grundstellung zurückführbar. Es sind Sprühmittel vorgesehen, um die innere Formfläche und die Mündungsringanschlussflächen mit einem Schmier- und Trennmittel zu besprühen.

Als Sprühmittel sind für jeden Formhohlraum insgesamt drei Sprühköpfe vorgesehen. Je ein Sprühkopf ist jeder Formhälfte zugeordnet, und zwar so, dass sie die Formfläche dieser Formhälfte dann besprühen kann, wenn die jeweilige Formhälfte sich in der Öffnungsstellung befindet. Eine dritte Sprühdüse ist vorgesehen, um die Mündungsringhälften zu besprühen. Nachteilig bei dieser bekannten Ausführungsform ist, dass für jeden Formhohlraum drei Sprühköpfe notwendig sind und dass dementsprechend viele Hochdruckleitungen unter den an sich schon beengten Raumverhältnissen verlegt werden müssen.

Aus der US-Patentschrift 3 801 299 ist es bekannt, einen einzigen Sprühkopf für beide Formhälften vorzusehen, welcher in den Formhohlraum dann einsprüht, wenn der Formhohlraum geschlossen ist. Bei dieser bekannten Ausführungsform ist jedoch nicht Sorge getragen für eine ausreichende Versorgung der Mündungsringanschlussflächen mit Sprüh- und Trennmittel.

AUSGANGSPUNKT DER ERFINDUNG

Die Erfindung geht aus von einer Einrichtung zur Herstellung von Hohlglaskörpern, die eine Achse, einen Hohlglaskörperrumpf und einen Hohlglaskörperhals aufweisen,

diese Einrichtung umfassend einen Formhohlraum, der eine Achse und eine innere Formfläche mit einem ersten, dem Hohlglaskörperrumpf entsprechenden Abschnitt und mit einem zweiten, dem Hohlglaskörperhals entsprechenden Abschnitt aufweist,

wobei der erste Abschnitt der inneren Formfläche von zwei Formhälften gebildet ist, die in einer Grundstellung mit je einer Formtrennfläche in einer die Achse des Formhohlraums enthaltenden Formtrennebene zusammenstossen,

wobei ferner der zweite Abschnitt der inneren Formfläche von zwei Mündungsringhälften gebildet ist, die in einer Grundstellung mit je einer Mündungsringtrennfläche in einer die Achse des Formhohlraums enthaltenden Mündungsringtrennebene zusammenstossen und mit je einer Mündungsringanschlussfläche in einer zur Achse des Formhohlraums im wesentlichen senkrechten Anschlussebene an Formanschlussflächen der Formhälften anliegen,

wobei ferner die beiden Formhälften an ihren von den Mündungsringhälften abgelegenen Enden eine Einfüllöffnung für einen Glastropfen definieren,

wobei ferner die Einfüllöffnung durch einen Verschlusskörper verschliessbar ist,

wobei ferner zwischen die Mündungsringhälften ein Blasdorn einführbar ist,

wobei ferner die Formhälften aus ihrer Grundstellung heraus im wesentlichen senkrecht zu der Formtrennebene voneinander weg in eine Öffnungsstellung beweglich sind, um einen das Entnehmen des jeweiligen Hohlglaskörpers aus dem Formhohlraum gestattenden Spalt zwischen sich zu bilden,

wobei ferner die Mündungsringhälften mit dem jeweiligen Hohlglaskörper aus ihrer Grundstellung durch den Spalt hindurch an einen Übergabeort beweglich und an diesem im wesentlichen senkrecht zu der Mündungsringtrennebene voneinander weg in eine Lösestellung beweglich sind, um den Hohlglaskörper an Übernahmemittel abzugeben,

wobei ferner die Mündungsringhälften von der Lösestellung und dem Übergabeort durch den Spalt der in Öffnungsstellung befindlichen Formhälften hindurch in ihre Grundstellung zurückführbar sind,

wobei ferner die Formhälften nach Rückführung der Mündungsringhälften in deren Grundstellung ebenfalls wieder in ihre Grundstellung zurückführbar sind und

wobei ferner Sprühmittel vorgesehen sind, um die innere Formfläche mit einem Schmier- und Trennmittel zu besprühen. Diese Einrichtung ist in der obengenannten Europäischen Patentanmeldung offenbart.

### AUFGABE DER ERFINDUNG

Es ist die Aufgabe der Erfindung, bei einer solchen Einrichtung zur Herstellung von Hohlglaskörpern die Sprühmittel so anzuordnen und zu betreiben, dass mit einer verringerten Anzahl von Düsenteilen und mit entsprechend geringeren Leitungswegen auszukommen ist, wobei aber dennoch eine ausreichende Versorgung der Formflächen und der Mündungsringanschlussflächen gewährleistet ist.

### LÖSUNG DER AUFGABE

Zur Lösung dieser Aufgabe wird erfindungsgemäss vorgeschlagen, dass dem Formhohlraum ausserhalb desselben, nahe der Achse des Formhohlraums und auf der der Einfüllöffnung zugekehrten Seite der Formhälften ein einziges Düsenteil zugeordnet ist, welches sowohl der Besprühung mindestens eines Teils der inneren Formfläche als auch der Besprühung mindestens eines Teils der Mündungsringanschlussflächen dient,

wobei das Düsenteil mit einer Steuervorrichtung verbunden ist, welche entweder

eine erste Folge von Sprühstössen durch das Düsenteil dann auslöst, wenn die Formhälften und die Mündungsringhälften in ihrer Grundstellung sind, d.h. der Formhohlraum geschlossen ist, so dass im wesentlichen nur die innere Formfläche besprüht wird, und eine zweite Folge von Sprühstössen dann auslöst, wenn die Mündungsringhälften ihre Grundstellung einnehmen, die Formhälften sich jedoch noch in der Öffnungsstellung befinden, so dass im wesentlichen nur die Mündungsringanschlussflächen von den Sprühstössen beaufschlagt werden oder

welche eine einzige Folge von Sprühstössen jeweils dann auslöst, wenn die Mündungsringhälften sich in ihrer Grundstellung befinden und die Formhälften noch nicht vollständig geschlossen sind, derart, dass bei jedem Sprühstoss sowohl die innere Formfläche als auch wenigstens ein Teil der Mündungsringanschlussflächen besprüht werden.

Es ist zwar bei der zweiten Alternative in manchen Fällen von Nachteil, dass die Dosierung auf der inneren Formfläche und die Dosierung auf den Mündungsringanschlussflächen in Abhängigkeit voneinander stehen. Diese Abhängigkeit kann durch die Dichteverteilung des Sprühstrahls gemildert werden, die sich ihrerseits durch die Form der Sprühdüse und durch den Sprühdruck beeinflussen lässt. In manchen Fällen muss man aber doch auf die erste Alternative zurückgreifen, bei der zwei Folgen von Sprühstössen erzeugt werden.

Verschiedene weitere Merkmale der Erfindung ergeben sich aus den Unteransprüchen, die einen Teil der Offenbarung darstellen.

Zum besseren Verständnis der Erfindung, ihrer Vorteile und weiterer Merkmale der Erfindung sowie Einzelheiten über den Gebrauch der Erfindung wird auf die Zeichnungen hingewiesen, in denen bevorzugte Ausführungsformen der Erfindung dargestellt sind.

### KURZBESCHREIBUNG DER ZEICHNUNGEN

In den Zeichnungen stellen dar:

Figur 1a das Besprühen der Mündungsringhälften bei geöffneten Vorformhälften einer Vorform in Seitenansicht;

Figur 2a eine Draufsicht auf die geschlossenen Mündungsringhälften bei geöffneten Vorformhälften mit dem Sprühbild des auftreffenden Sprühstrahls;

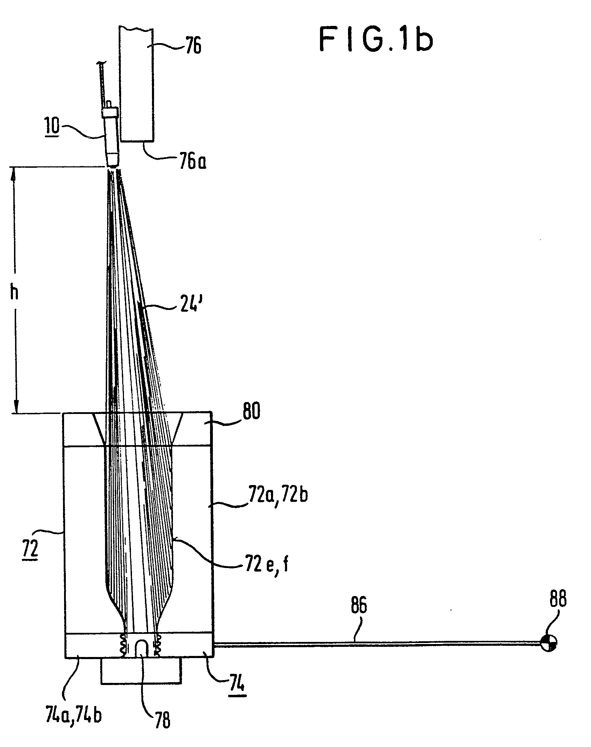

Figur 1b das Einsprühen in die geschlossene Vorform;

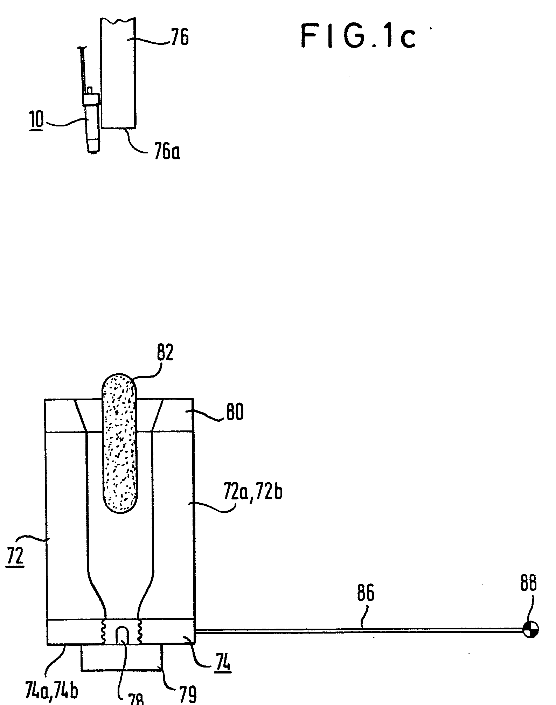

Figur 1c den Eintritt des Glastropfens in die geschlossene Vorform;

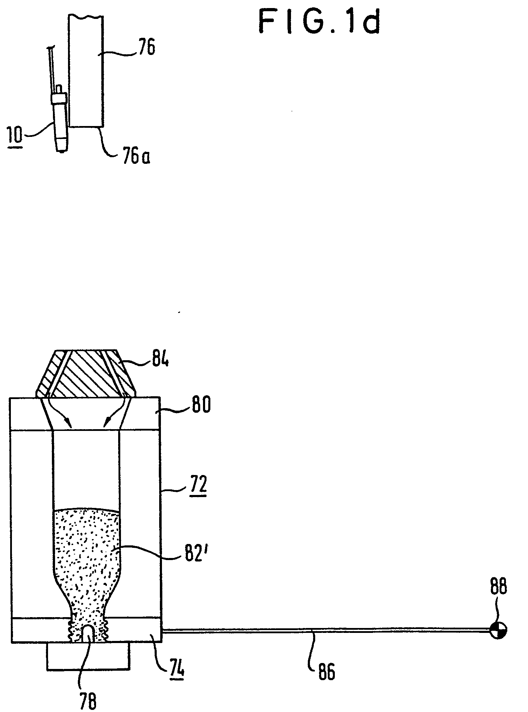

Figur 1d das Setzen des Glastropfens in der geschlossenen Vorform;

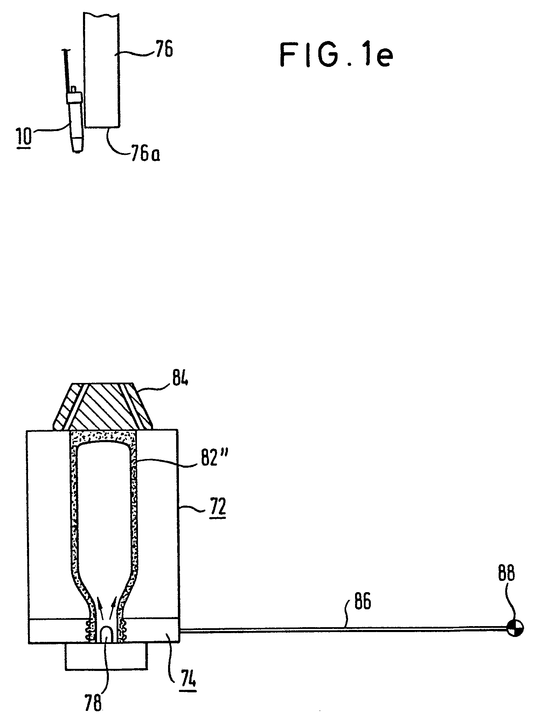

Figur 1e die Ausbildung des Külbels in der geschlossenen Vorform;

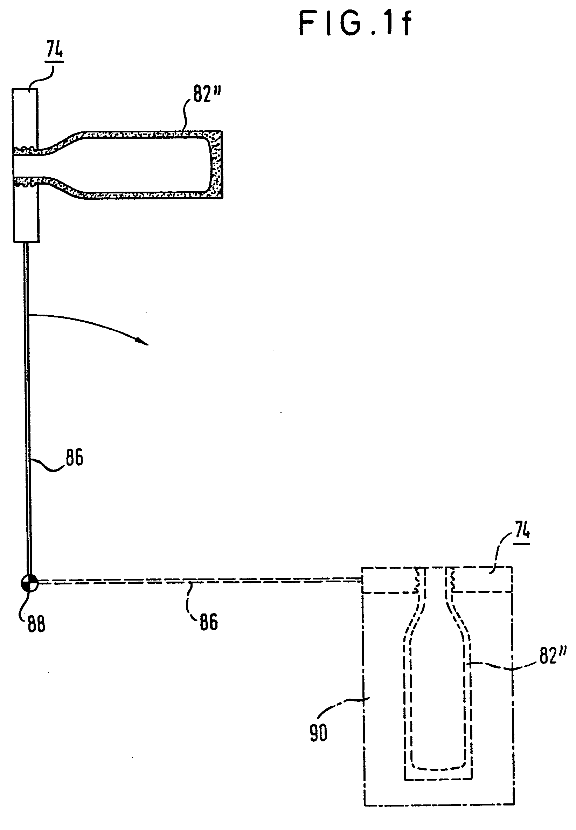

Figur 1f den Übergang des Külbels von der geöffneten Vorform in eine Endform;

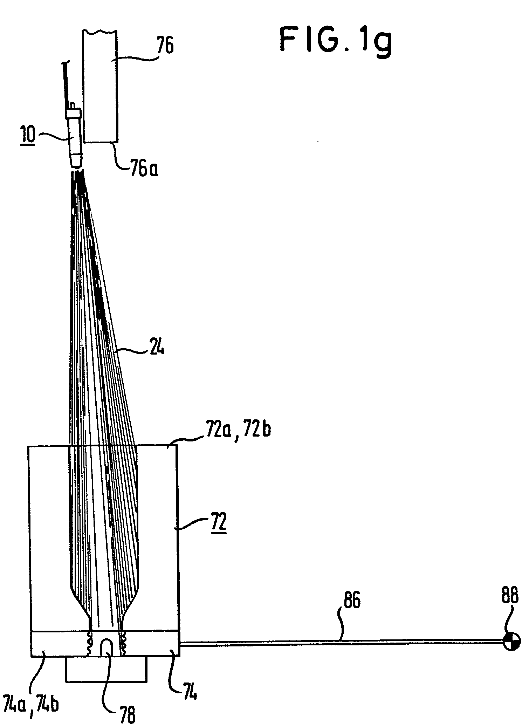

Figur 1g das Einsprühen in die teilweise geöffnete Vorform;

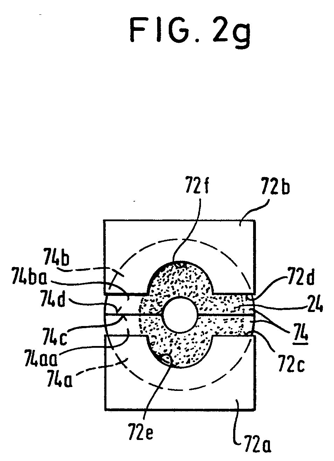

Figur 2g eine Draufsicht auf den geschlossenen Mündungsring bei teilweise geöffneten Vorformhälften mit dem Sprühbild des auftreffenden Sprühstrahls auf den Mündungsringhälften;

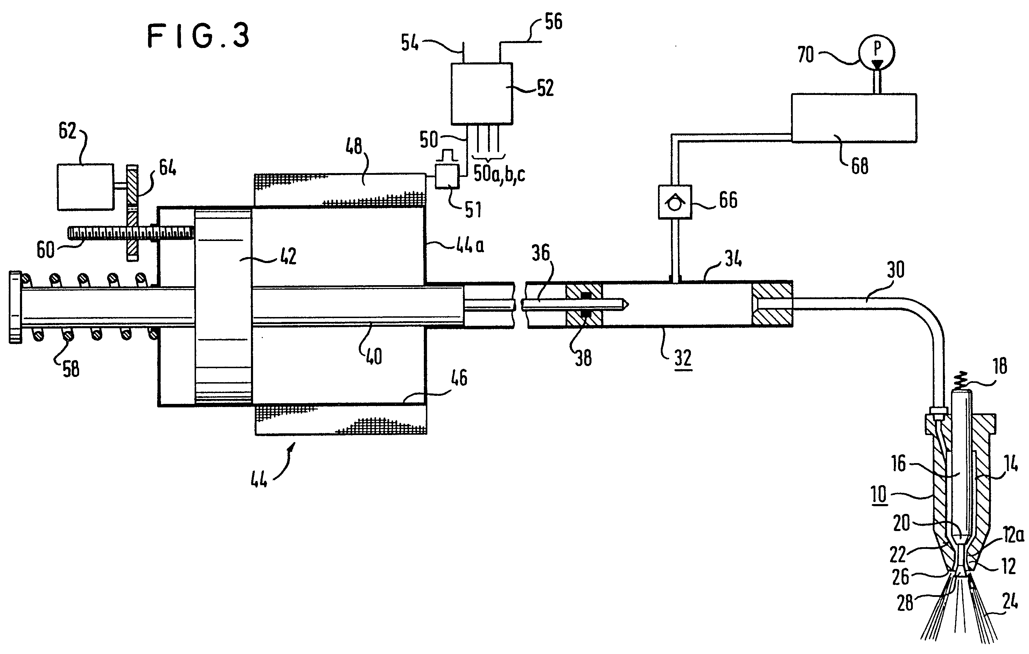

Figur 3 das Schema des Sprühkopfes mit Kolbenzylinderaggregat und Antriebseinrichtung für das Kolbenzylinderaggregat.

In Figur 3 ist ein Sprühkopf ganz allgemein mit 10 bezeichnet. Dieser Sprühkopf weist ein Düsenteil 12 auf. In dem Sprühkopf 10 ist anschliessend an den inneren Ausgang 12a des Düsenteils 12 eine Steuerkammer 14 ausgebildet. In diese Steuerkammer taucht ein plungerartig ausgebildeter Düsenverschlusskolben 16 ein, der in dem Sprühkopf axial verschiebbar geführt ist und durch eine Vorspanneinrichtung 18 nach unten vorgespannt ist. An dem unteren Ende des Düsenverschlusskolbens ist eine Verschlussfläche 20 ausgebildet, die mit einer Sitzfläche 22 des Düsenteils 12 zusammenarbeitet. Wenn der Druck in der Steuerkammer 14 ein durch die Vorspanneinrichtung 18 vorbestimmtes Mass überschreitet, wird der Düsenverschlusskolben 16 nach oben angehoben, so dass das in die Steuerkammer 14 eingetretene Mittel in Form eines Sprühstrahls 24 aus dem unteren Düsenausgang 26 austreten kann. Mit dem Düsenverschlusskolben 16 ist eine Düsennadel 28 verbunden, welche das Düsenteil 12 durchsetzt und unten konisch erweitert ist. Durch die Form des Düsenteils 12 und der Düsennadel 28 kann die Form des Sprühstrahls variiert werden. Im Beispielsfall ist ein Sprühkegel gezeichnet, dessen Sprühdichte im Randbereich grösser ist als im Achsbereich.

Die Steuerkammer 14 ist über eine Hochdruckleitung 30 an ein Kolbenzylinderaggregat 32 angeschlossen. Das Kolbenzylinderaggregat besteht aus einem Zylinder 34 und einem Plungerkolben 36, der durch eine Dichtung 38 in den Zylinder 34 eingeführt ist. Der Plungerkolben 36 ist über eine Kolbenstange 40 mit einem Tauchanker 42 einer elektromagnetischen Antriebsvorrichtung 44 verbunden. Der Tauchanker 42 ist in einem Führungsgehäuse 46 geführt, das von einer elektrischen Spule 48 umgeben ist. Die elektrische Spule 48 ist über eine Leitung 50 an eine Steuereinheit 52 angeschlossen, von der weitere Leitungen 50a, b, c für weitere Sprühstellen abgehen. Die Steuereinheit 52 ist über eine Leitung 54 mit einer Starkstromversorgung verbunden und über eine Leitung 56 an die Gesamtsteuerung der Hohlglasfertigungsmaschine angeschlossen.

Der Tauchanker 42 ist durch eine Schraubendruckfeder 58 in die in Figur 3 gezeichnete linke Endstellung vorgespannt. Diese linke Endstellung ist durch einen als Gewindebolzen ausgebildeten verstellbaren Anschlag 60 bestimmt. Der Gewindebolzen 60 kann über einen Servomotor 62 und ein Getriebe 64 eingestellt werden.

Der Zylinder 34 ist über ein Rückschlagventil 66 mit einem Tank 68 verbunden, in dem das zu besprühende Trenn- bzw. Schmiermittel enthalten ist. Dieses Mittel wird durch eine Pumpe 70 unter Vordruck gehalten.

Wenn die Steuereinheit 52 ein Sprühsignal erhält, so wird die Spule 48 erregt und der Tauchanker 42 entgegen der Wirkung der Feder 58 nach rechts vorgetrieben. Dabei tritt der Plungerkolben 36 in den Zylinder 34 ein und verdrängt einen Teil des darin enthaltenen Mittels, so dass dieses unter Öffnung des Düsenverschlusskolbens 16 als Sprühstrahl 24 aus dem Düsenteil 12 austritt. Die Dosierungsmenge ist bestimmt durch den Kolbenhub, und dieser wird bestimmt durch den Tauchankerhub. Der Tauchankerhub wird durch den Gewindebolzen 60 eingestellt, wobei die rechte Endstellung des Tauchankers 42 bestimmt ist durch den Anschlag an der Wand 44a. Die Spule 48 wird mit Gleichstromimpulsen versorgt. Die Impulshöhe ist verantwortlich für die Vorschubgeschwindigkeit und damit für die Sprühdauer. Die Impulslänge ist jedenfalls so eingestellt, dass der Tauchkolben 42 seine rechte Endstellung erreicht und damit die durch die Einstellung des Gewindebolzens 60 vorgegebene Sprühmenge auf jeden Fall ausgesprüht wird. Nach Aufhören des jeweiligen Stromimpulses kehrt der Tauchanker 42 in die in Figur 3 gezeichnete linke Endstellung zurück und der Plungerkolben 36 in die in Figur 3 gezeichnete Endstellung. Dabei wird der Zylinder 34 über das Rückschlagventil 66 erneut aufgefüllt.

In der Leitung 50 liegt ein Impulsformungsglied 51, welches es erlaubt, die Impulslänge zu verändern. Dadurch ist eine weitere Möglichkeit gegeben, um die Dosierung bei jedem Sprühstoss zu verändern. Man kann sich vorstellen, dass auf den Gewindebolzen 60 und die zugehörigen Teile 62 und 64 verzichtet ist. Der Tauchanker 42 nimmt dann unter der Wirkung der Schraubendruckfeder 58 seine linke Endstellung ein und wird, je nach der in dem Impulsformungsglied 51 eingestellten Impulsdauer, mehr oder minder weit nach rechts gezogen. Das Impulsformungsglied 51 kann von einem zentralen Steuerpult aus eingestellt werden.

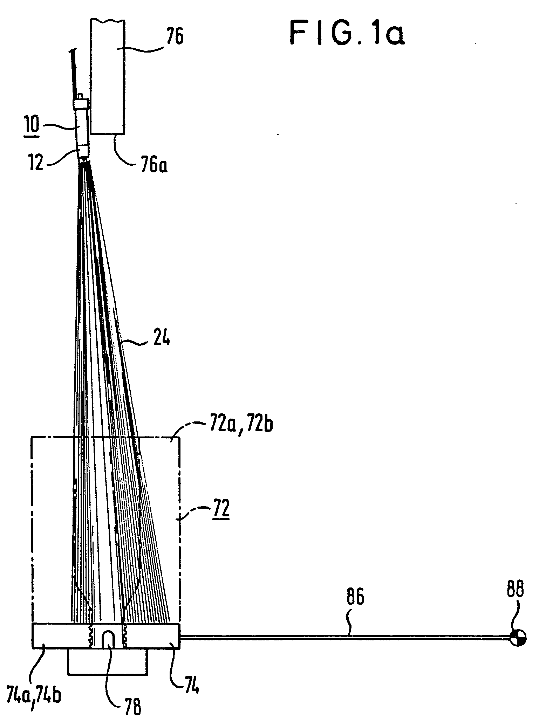

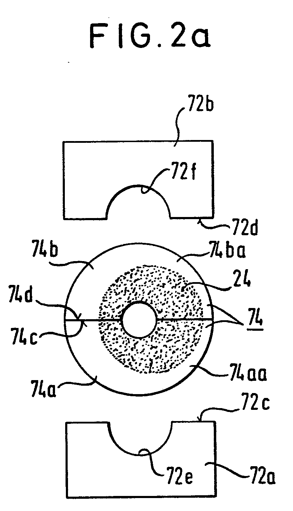

In Figur 1a ist schematisch eine Vorform 72 dargestellt, die aus zwei Vorformhälften 72a, 72b besteht. Die Vorformhälften sind geöffnet, d.h. senkrecht zur Zeichenebene der Figur 1a voneinander entfernt. An dem unteren Ende der Vorform 72 befindet sich ein Mündungsring 74, der aus zwei Mündungsringhälften 74a, 74b besteht. Dieser Mündungsring dient zur Ausbildung des Halses des entstehenden Hohlglaskörpers (Flasche). Wie aus der zugehörigen Figur 2a zu ersehen, sind die Mündungsringteile 74a, 74b in der Stellung der Figuren 1a und 2a geschlossen, während die Vorformhälften 72a, 72b noch geöffnet sind. Die Lage des Sprühkopfes 10 ist aus Figur 1a zu ersehen. Der Sprühkopf befindet sich in unmittelbarer Nachbarschaft des Endes 76a einer Glaszuführungsrinne 76, auf deren Bedeutung noch einzugehen sein wird. Bei geöffneten Vorformhälften 72a, 72b liegen die nach oben gerichteten Mündungsringanschlussflächen 74aa, 74ba einem Sprühstrahl 24 offen. Dieser Sprühstrahl trifft auch auf einen Blasdorn 78, der im Zentrum des Mündungsrings 74 gehalten ist und auf dessen Bedeutung noch einzugehen sein wird. Der Sprühstrahl 24 trifft nicht auf die Formtrennflächen 72c, 72d, was erwünscht ist; er trifft auch nicht auf die Mündungsringtrennflächen 74c, 74d, was erwünscht ist. Er trifft aber auch nicht auf die Formflächen 72e, 72f, die eines Besprühens mit Schmier- und Trennmittel bedürfen.

Nach Beendigung des Sprühstrahls 24 wird, wie in Figur 1b dargestellt, die Vorform 72 geschlossen, indem die Vorformhälften 72a, 72b senkrecht zur Zeichenebene zusammentreten. Auf der Vorform 72 liegt ein Tropfring 80 auf, auf dessen Bedeutung noch einzugehen sein wird. Man erkennt, dass aus dem Sprühkopf 10 nunmehr ein Sprühstrahl 24' in die Hohlform 72 eintreten kann, der die Formflächen 72e, 72f der Vorform mit Schmier-bzw. Trennmittel benetzt. Figur 1b lässt die Höhe h des Sprühkopfes 10 über der Vorform 72 erkennen, die im Beispielsfall bei ca. 600 mm liegt.

Es ist ferner zu bemerken, dass das Einsprühen des Sprühstrahls 24 nicht jedes Mal bei Erreichen der Stellung gemäss Figuren 1a, 2a erfolgen muss; es genügt vielmehr, wenn in periodischen Abständen ein Sprühstrahl 24 erzeugt wird. Auch der Sprühstrahl 24' muss nicht jedes Mal eingeschaltet werden, wenn der Zustand gemäss Figur 1b erreicht wird. Beispielsweise kann der Sprühstrahl gemäss Figur 1b nach jedem fünften Ausformvorgang ausgelöst werden, während es genügt, den Sprühstrahl gemäss Figuren 1a und 2a nach jedem zehnten bis jedem dreissigsten Ausformvorgang auszulösen.

In Figur 1c erkennt man, dass aus der Glaszuführungsrinne 76 ein Glastropfen 82 durch den Tropfring 80 in die geschlossene Vorform 72 eingetreten ist. Gemäss Figur 1d hat sich der Tropfen 82 in der geschlossenen Vorform 72 gesetzt, gegebenenfalls unter der Einwirkung von oben durch einen Vorformbodenzylinder 84 zugeführter Setzluft.

Gemäss Figur 1e ist der Tropfring 80 entfernt und der Vorformbodenzylinder 84 unmittelbar auf die Vorform 72 aufgesetzt, wobei der Formhohlraum der Vorform 72 nunmehr nach oben dicht geschlossen ist. Durch den Blasdorn 78 wird nunmehr der gesetzte Tropfen 82' zu einem Külbel 82'' verformt. Nach Abkühlen des Külbels 82'' öffnet die Vorform 72, indem die Vorformhälften 72a, 72b wieder in die Stellung der Figur 2a übergehen. Der Vorformbodenzylinder 84 wird entfernt. Der erhärtete Külbel ist dann nur noch durch den Mündungsring 74 gehalten und kann durch den Schwenkträger 86 um die Achse 88 geschwenkt werden. Der Schwenkvorgang ist in Figur 1f erkennbar, wobei in Figur 1f der Külbel 82'', von dem Mündungsring gehalten, eine Zwischenstellung einnimmt, während gestrichelt die Stellung des Külbels 82'' nach Eintritt in eine Endform dargestellt ist. Während die Weiterverformung des Külbels 82'' in der Endform 90 erfolgt, kehrt der Mündungsring 74 in die Stellung der Figuren 1a und 2a zurück, wobei er auf dem Rückweg schliessen kann, so dass unmittelbar nach dem Erreichen des Zustands der Figur 2a der Sprühstrahl 24 einsetzen kann.

Es ist zu bemerken, dass die Endform 90 in analoger Weise mit Schmier- und Trennmittel besprüht werden kann.

Zusammenfassend kann der Arbeitsablauf bei der Herstellung einer Flasche wie folgt dargestellt werden:

Gemäss Figur 1c ist von den Vorformhälften 72a, 72b, den Mündungsringhälften 74a, 74b und dem Blasdorn 78 sowie dem zugehörigen Blasdornträger 79 ein geschlossener Formhohlraum gebildet. In diesen Formhohlraum fällt durch den Tropfring 80 ein Glastropfen 82 hinein, der aus dem Ende 76a der Glaszuführungsrinne 76 abgegeben wird.

Gemäss Figur 1d wird der Vorformbodenzylinder 84 auf das obere Ende des Tropfrings 80 aufgesetzt und Setzluft unter Druck in den Formhohlraum eingeleitet, so dass sich der Glastropfen in dem unteren Teil des Formhohlraums ansammelt. Gemäss Figur 1e wird der Vorformbodenzylinder 84 nach Wegnahme des Tropfrings 80 unmittelbar auf das obere Ende der Vorformhälften aufgesetzt, so dass der Formhohlraum nach oben abgeschlossen ist. Nunmehr kann durch den Blasdorn 78 Luft in die noch flüssige Glasmasse eingeblasen werden, wobei der Külbel 82'' entsteht. Der Külbel kühlt rasch ab und erreicht eine Konsistenz, welche die Öffnung der Vorformhälften 72a, 72b erlaubt. Der Külbel 82'' ist dann nur noch durch die Mündungsringhälften 74a, 74b getragen.

Gemäss Figur 1f ist der Mündungsring 74 mit dem Külbel 82'' aus der geöffneten Vorform 72 herausgefahren und befindet sich auf dem Weg zu der Endform 90. Sobald der Külbel 82'' von der Endform 90 aufgenommen ist, die ähnlich wie die Vorform 72 aufgebaut sein kann, öffnet der Mündungsring 74, indem die Mündungsringhälften kurzzeitig voneinander abheben. Nunmehr beginnt die Rückwärtsbewegung des Mündungsrings 74, wobei sich die Mündungsringhälften schon vor Erreichen der in Figur 1f ausgezogen gezeichneten Stellung wieder geschlossen haben. Der Mündungsring 74 tritt durch den Spalt zwischen den noch voneinander abgehobenen Vorformhälften 72a, 72b in seine Grundstellung gemäss Figur 1a zurück. Sobald nun der Mündungsring 74 seine Grundstellung gemäss Figur 1a erreicht hat und bevor die Schliessung der Vorform 72 beginnt oder in der Anfangsphase dieser Schliessbewegung, wird der Sprühstrahl 24 durch den Sprühkopf 10 ausgesprüht, so dass die Mündungsringanschlussflächen 74a, 74b besprüht werden. Der Sprühstrahl 24 kann dabei unterschiedliche Dichteverteilung in einem Querschnitt senkrecht zu seiner Achse besitzen. Je nach den Schmier- und Trennmittelbedürfnissen auf den einzelnen Flächen kann man die Sprühmittelverteilung in dem Sprühstrahl einstellen. Die Besprühung der Mündungsringanschlussflächen 74aa, 74ba erfolgt im Beispielsfall nach jedem dreissigsten Ausformvorgang.

Sobald sich die Vorformhälften 72a, 72b gemäss Figur 1b geschlossen haben, erfolgt ein weiterer Sprühstrahl 24', durch den die innere Formfläche auf der Innenseite der Formhälften 72a, 72b und auf der Innenseite der Mündungsringhälften 74a, 74b mit Trenn- und Schmiermittel benetzt werden. Diese Sprühvorgänge erfolgen im Beispielsfall nach jedem fünften Ausformungsvorgang.

Gemäss Figur 1c beginnt dann der nächste Ausformungsvorgang.

Im Beispielsfall ist der Sprühkopf 10 stationär angeordnet. Es ist jedoch auch denkbar, den Sprühkopf 10 beweglich anzuordnen, so dass er in Abhängigkeit vom Maschinentakt gesteuert zwischen einer Sprühstellung und einer zurückgezogenen Stellung verstellbar ist.

Der Sprühkopf 10 kann in jedem Fall in grossem Abstand von beispielsweise 500 bis 800 mm von der Vorform und dem Mündungsring angeordnet werden, wenn der Sprühvorgang ohne Trägerluft stattfindet und wenn mit Drücken von 100 bis 1000, vorzugsweise 300 bis 700 bar, gearbeitet wird.

Die Schmier- und Trennmittel sind beispielsweise auf der Basis von Mineralöl und Graphit aufgebaut und haben bei Zimmertemperatur eine Viskosität η von ca. 50 bis 3000 cp. Diese hochviskosen Schmier- und Trennmittel lassen sich mit den herkömmlichen Einrichtungen nur verhältnismässig ungenau auf einzelne Sprühstellen dosieren. Es ist deshalb bedeutsam, dass jedem Sprühkopf ein besonderes Kolbenzylinderaggregat gemäss Figur 3 zugeordnet ist.

Was den Zeitablauf anbelangt, so ist zu bedenken, dass auf modernen Hohlglasfertigungsmaschinen im Schnitt alle 6 Sekunden ein Hohlglaskörper aus jedem Formhohlraum entsteht. Die Taktzeit geht herunter bis zu 4 Sekunden. Daraus ergibt sich, dass für die Einsprühvorgänge unter Berücksichtigung aller anderen notwendigen Vorgänge nur eine äusserst kurze Zeit in der Grössenordnung von maximal 100 bis 150 Millisekunden zur Verfügung steht.

Es ist noch zu bemerken, dass es grundsätzlich möglich ist, mehrere Kolbenzylinderaggregate 32 einem gemeinsamen Antrieb 44 zuzuordnen. Andererseits ist es aber auch möglich, die Stromversorgung für die einzelnen Sprühstellen zugeordneten Antriebe 44 so weit zu individualisieren, dass für einzelne Sprühstellen unterschiedliche Antriebszeiten und Antriebskräfte eingestellt werden können.

Bei Anwendung des Impulsformungsglieds 51 kann dieses auch ferngesteuert sein, so dass es möglich ist, von einer zentralen Steuereinheit aus die Dosierung für die einzelnen Sprühstellen einzelner Formen individuell einzustellen. Auf diese Weise kann auch dem Zustand einzelner Formen individuell Rechnung getragen werden, dass z.B. eine neu eingesetzte Form eine andere Besprühung notwendig macht als eine bereits länger eingesetzte Form.

In den Figuren 1g und 2g ist eine von der soweit beschriebenen Betriebsweise abweichende Betriebsweise dargestellt. Bei dieser Betriebsweise wird, wie insbesondere aus Figur 2g zu ersehen, der Sprühstoss 24 dann erzeugt, wenn die Vorformhälften 72a und 72b bereits wieder teilweise zusammengegangen sind, so dass die inneren Formflächen 72e und 72f gleichzeitig mit den Mündungsringanschlussflächen 74aa, 74ba besprüht werden. Bei dieser Ausführungsform ist nur eine einzige Folge von Sprühstössen möglich, die beispielsweise nach jeweils 5 Ausformungsvorgängen je einen Sprühstoss liefert.

Abweichend von der Darstellung nach Fig. 2a ist es auch möglich, den Sprühstrahl 24 bzw. 24' so auszubilden, dass er bei geneigtem und/oder achsversetztem Sprühkopf ein annähernd zentrisches Sprühbild an der Auftreffstelle ergibt, z.B. durch besondere Ausbildung des Düsenteils 12 und/oder der Düsennadel 28 im Hinblick auf einen gebogenen Sprühstrahl.

In der Leitung 30 der Fig. 3 kann am Austritt aus dem Zylinder 34 ein zum Zylinder 34 hinschliessendes Rückschlagventil vorgesehen sein, welches einen einmal erzeugten Druck in der Leitung 30 beim Zurückfahren des Kolbens 36 aufrechterhält, so dass der Einfluss der Leitungselastizität auf die Dosierung geringgehalten wird.

## Patentansprüche

1. Einrichtung zur Herstellung von Hohlglaskörpern, die eine Achse, einen Hohlglaskörperrumpf und einen Hohlglaskörperhals aufweisen, diese Einrichtung umfassend einen Formhohlraum, der eine Achse und eine innere Formfläche mit einem ersten, dem Hohlglaskörperrumpf entsprechenden Abschnitt und mit einem zweiten, dem Hohlglaskörperhals entsprechenden Abschnitt aufweist,
wobei der erste Abschnitt der inneren Formfläche von zwei Formhälften (72a, 72b) gebildet ist, die in einer Grundstellung mit je einer Formtrennfläche (72c, 72d) in einer die Achse des Formhohlraums enthaltenden Formtrennebene zusammenstossen,
wobei ferner der zweite Abschnitt der inneren Formfläche von zwei Mündungsringhälften (74a, 74b) gebildet ist, die in einer Grundstellung mit je einer Mündungsringtrennfläche (74c, 74d) in einer die Achse des Formhohlraums enthaltenden Mündungsringtrennebene zusammenstossen und mit je einer Mündungsringanschlussfläche (74aa, 74ba) in einer zur Achse des Formhohlraums im wesentlichen senkrechten Anschlussebene an Formanschlussflächen der Formhälften (72a, 72b) anliegen,
wobei ferner die beiden Formhälften (72a, 72b) an ihren von den Mündungsringhälften (74a, 74b) abgelegenen Enden eine Einfüllöffnung für einen Glastropfen (82) definieren,
wobei ferner die Einfüllöffnung durch einen Verschlusskörper (84) verschliessbar ist,
wobei ferner zwischen die Mündungsringhälften (74a, 74b) ein Blasdorn (78) einführbar ist,
wobei ferner die Formhälften (72a, 72b) aus ihrer Grundstellung heraus im wesentlichen senkrecht zu der Formtrennebene voneinander weg in eine Öffnungsstellung beweglich sind, um einen das Entnehmen des jeweiligen Hohlglaskörpers (82'') aus dem Formhohlraum gestattenden Spalt zwischen sich zu bilden,
wobei ferner die Mündungsringhälften (74a, 74b) mit dem jeweiligen Hohlglaskörper (82'') aus ihrer Grundstellung durch den Spalt hindurch an einen Übergabeort beweglich und an diesem im wesentlichen senkrecht zu der Mündungsringtrennebene voneinander weg in eine Lösestellung beweglich sind, um den Hohlglaskörper (82'') an Übernahmemittel (90) abzugeben,
wobei ferner die Mündungsringhälften (74a, 74b) von der Lösestellung und dem Übergabeort durch den Spalt der in Öffnungsstellung befindlichen Formhälften (72a, 72b) hindurch in ihre Grundstellung zurückführbar sind,
wobei ferner die Formhälften (72a, 72b) nach Rückführung der Mündungsringhälften (74a, 74b) in deren Grundstellung ebenfalls wieder in ihre Grundstellung zurückführbar sind und

wobei ferner Sprühmittel (10) vorgesehen sind, um die innere Formfläche mit einem Schmier- und Trennmittel zu besprühen, dadurch gekennzeichnet,

dass dem Formhohlraum ausserhalb desselben, nahe der Achse des Formhohlraums und auf der der Einfüllöffnung zugekehrten Seite der Formhälften (72a, 72b) ein einziges Düsenteil (12) zugeordnet ist, welches sowohl der Besprühung mindestens eines Teils (72e, 72f) der inneren Formfläche als auch der Besprühung mindestens eines Teils der Mündungsringanschlussflächen (74aa, 74ba) dient

wobei das Düsenteil (12) mit einer Steuervorrichtung (54) verbunden ist, welche entweder

eine erste Folge von Sprühstössen (24') durch das Düsenteil (12) dann auslöst, wenn die Formhälften (72a, 72b) und die Mündungsringhälften (74a, 74b) in ihrer Grundstellung sind, d.h. der Formhohlraum geschlossen ist, so dass im wesentlichen nur die innere Formfläche besprüht wird, und eine zweite Folge von Sprühstössen (24) dann auslöst, wenn die Mündungsringhälften (74a, 74b) ihre Grundstellung einnehmen, die Formhälften (72a, 72b) sich jedoch noch in der Öffnungsstellung befinden, so dass im wesentlichen nur die Mündungsringanschlussflächen (74aa, 74ba) von den Sprühstössen (24) beaufschlagt werden oder

welche eine einzige Folge von Sprühstössen (24) jeweils dann auslöst, wenn die Mündungsringhälften (74a, 74b) sich in ihrer Grundstellung befinden und die Formhälften (72a, 72b) noch nicht vollständig geschlossen sind, derart, dass bei jedem Sprühstoss sowohl die innere Formfläche als auch wenigstens ein Teil der Mündungsringanschlussflächen (74aa, 74ba) besprüht werden.

2. Einrichtung nach Anspruch 1, dadurch gekennzeichnet, dass das Düsenteil (12) an einem solchen Ort stationär angeordnet ist, dass es den Übergang der den jeweiligen Hohlglaskörper (82'') tragenden Mündungsringhälften (74a, 74b) aus deren Grundstellung an deren Übergabeort nicht behindern.

3. Einrichtung nach Anspruch 1 oder 2, dadurch gekennzeichnet, dass das Düsenteil (12) in der Nähe des Endes (76a) einer Glaszuführungsrinne (76) angeordnet ist.

4. Einrichtung nach einem der Ansprüche 1 bis 3, dadurch gekennzeichnet, dass die Sprühstösse (24') der ersten Folge in kürzeren zeitlichen Abständen aufeinanderfolgen als die Sprühstösse (24) der zweiten Folge.

5. Einrichtung nach einem der Ansprüche 1 bis 4, dadurch gekennzeichnet, dass der Zeitpunkt der Sprühstösse (24, 24') bezogen auf den Arbeitstakt der Einrichtung einstellbar ist.

6. Einrichtung nach einem der Ansprüche 1 bis 5, dadurch gekennzeichnet, dass die Frequenz der Sprühstossfolge einstellbar ist.

7. Einrichtung nach einem der Ansprüche 1 bis 6, dadurch gekennzeichnet, dass die Sprühmenge pro Sprühstoss einstellbar ist.

8. Einrichtung nach einem der Ansprüche 1 bis 7, dadurch gekennzeichnet, dass das Düsenteil (12) ein EIN-Stoffdüsenteil ist, d.h. ohne Druckgaszusatz arbeitet.

9. Einrichtung nach einem der Ansprüche 1 bis 8, dadurch gekennzeichnet, dass das Düsenteil (12) mit einem Druckerzeuger in Form eines Kolbenzylinderaggregats (32) verbunden ist, welches nur ein einziges Düsenteil (12) versorgt.

10. Einrichtung nach einem der Ansprüche 1 bis 9, dadurch gekennzeichnet, dass das Düsenteil (12) Teil eines Sprühkopfes (10) ist und dass dem Düsenteil (12) ein unter Vorspannung stehender Düsenverschlusskolben (16) zugeordnet ist, wobei dieser Düsenverschlusskolben (16) durch Anlegen des von dem Kolbenzylinderaggregat (32) aufgebrachten Sprühdrucks in eine Öffnungsstellung überführbar ist.

11. Einrichtung nach Anspruch 10, dadurch gekennzeichnet, dass in dem Sprühkopf (10), dem Düsenteil (12) vorausgehend, eine Steuerkammer (14) ausgebildet ist, welche einen Teil des in dem Sprühkopf (10) verschiebbar geführten Düsenverschlusskolbens (16) unter Belassung eines freien Steuerraums aufnimmt, dass dieser Düsenverschlusskolben (16) eine Verschlussfläche (20) gegenüber einer Sitzfläche (22) am steuerkammerseitigen Düsenausgang aufweist und dass der Gesamtquerschnitt des Düsenverschlusskolbens (16) grösser ist als sein durch die Sitzfläche (22) bedeckter Teilquerschnitt.

12. Einrichtung nach Anspruch 11, dadurch gekennzeichnet, dass der Düsenverschlusskolben (16) eine das Düsenteil (12) durchdringende sprühstrahlbeeinflussende Düsennadel (28) trägt.

13. Einrichtung nach einem der Ansprüche 9 bis 12, dadurch gekennzeichnet, dass das Kolbenzylinderaggregat (32) einen über ein Ansaugventil (66), insbesondere ein Rückschlagventil, mit einem Schmier- bzw. Trennmitteltank verbundenen Zylinder (34) aufweist und dieser Zylinder gegebenenfalls ohne Zwischenschaltung weiterer Ventile mit der Steuerkammer (14) des Sprühkopfes (10) verbunden ist.

14. Einrichtung nach einem der Ansprüche 9 bis 13, dadurch gekennzeichnet, dass der Kolben (36) durch einen elektromagnetischen Antrieb (44) verstellbar ist.

15. Einrichtung nach Anspruch 14, dadurch gekennzeichnet, dass der Kolben (36) durch Federkraft (58) in eine erste aus dem Zylinder (34) zurückgezogene Endstellung vorgespannt und in die andere in den Zylinder (34) eingefahrene Endstellung verschiebbar ist.

16. Einrichtung nach einem der Ansprüche 14 und 15, dadurch gekennzeichnet, dass der elektromagnetische Antrieb (44) ein gleichstromgespeister Tauchankerantrieb ist.

17. Einrichtung nach einem der Ansprüche 14 bis 16, dadurch gekennzeichnet, dass der elektromagnetische Antrieb (44) mit Stromstössen von einstellbarer Länge beschickbar ist.

18. Einrichtung nach einem der Ansprüche 9 bis 17, dadurch gekennzeichnet, dass der Antrieb für den Kolben (36) von einer einer Gruppe von Sprühstellen, insbesondere sämtlichen Sprühstellen, gemeinsamen Steuereinheit (52) gesteuert ist.

19. Einrichtung nach einem der Ansprüche 9 bis 18, dadurch gekennzeichnet, dass das Kolbenzylinderaggregat (32) auf die Erzeugung von Drükken von 100 bis 1000 bar, vorzugsweise 300 bis 700 bar, eingestellt ist.

20. Einrichtung nach einem der Ansprüche 1 bis 19, dadurch gekennzeichnet, dass das jeweilige Düsenteil (12) auf die Erzeugung eines Sprühkegels abgestellt ist.

21. Einrichtung nach Anspruch 20, dadurch gekennzeichnet, dass der Sprühkegel so eingestellt ist, dass er ohne Veränderung der Einstellung sowohl eine ausreichende Aussprühung des geschlossenen Formhohlraums als auch eine ausreichende Besprühung der Mündungsringanschlussflächen (74aa, 74ba) bewirkt.

22. Einrichtung nach einem der Ansprüche 1 und 3 bis 21, dadurch gekennzeichnet, dass das Düsenteil (12) im Maschinentakt zwischen einer Arbeitsstellung und einer zurückgezogenen Stellung verstellbar ist.

## Claims

1. Device for producing hollow glass bodies which comprise an axis, a trunk portion and a neck, the said device comprising a moulding cavity having an axis and an inner moulding surface with a first portion corresponding to the trunk of the hollow glass body and a second portion corresponding to the neck of the hollow glass body, the first portion of the inner mould face being formed by two mould halves (72a, 72b) which in a basic position have abutting mould separating surfaces (72c, 72d) disposed in a mould separating plane which contains the axis of the moulding cavity, the second portion of the inner mould face furthermore being formed by two mouth ring halves (74a, 74b) which in a basic position abut with in each case a mouth ring separating surface (74c, 74d) in a mouth ring separating plane which contains the axis of the moulding cavity, each having a mouth ring connecting face (74aa, 74ba) bearing on mould connecting faces of the mould halves (72a, 72b) in a plane of connection which is substantially perpendicular to the axis of the mould cavity, the two mould halves (72a, 72b) defining at their ends which are remote from the mouth ring halves (74a, 74b) a filling aperture for a glass blob (82), the filling aperture being adapted to be closed by an occluding member (84), a blower (78) being adapted to be inserted between the mouth ring halves (74a, 74b), the mould halves (72a, 72b) being movable out of their basic position substantially at a right-angle to the plane of mould separation, away from each other into an opening position in order to form between them a gap to allow removal of the relevant hollow glass body (82″) from the mould cavity, the mouth ring halves (74a, 74b) being movable together with the relevant hollow glass body (82″) out of their basic position, through the gap, to a transfer location, where they are movable away from each other substantially at a right-angle to the plane of separation of the mouth rings and into a detachment position so that the hollow glass body (82″) can be past over to receiving means (90), the mouth ring halves (74a, 74b) being returnable from the detachment position and the transfer location through the gap in the mould halves (72a, 72b) which are in the open position and back into their basic position, the mould halves (72a, 72b), after return of the mouth ring halves (74a, 74b) being likewise adapted to be returned to their basic position, spray means (10) furthermore being provided in order to spray the inner mould face with a lubricant and separating agent, characterised in that there is associated with the mould cavity, on the outside thereof, close to the axis of the mould and on the side of the mould halves (72a, 72b) which is towards the filling aperture, a single nozzle part (12) which serves both for spraying at least one part (72e, 72f) of the inner mould face and also for spraying at least one part of the mouth ring connecting faces (74aa, 74ba), the nozzle part (12) being connected to a control device (54) which either triggers a first sequence of spray pulses (24′) by the nozzle part (12) when the mould halves (72a, 72b) and the mouth ring halves (74a, 74b) are in their basic position, i.e. when the mould cavity is closed, so that essentially only the inner mould face is sprayed, and a second series of spray pulses (24) when the mouth ring halves (74a, 74b) assume their basic position but the mould halves (72a, 72b) are still in their open position so that it is substantially only the mouth ring connecting faces (74aa, 74ba) which are subject to the spraying pulses (24), or

which in each case triggers a single series of spray pulses (24) when the mouth ring halves (74a, 74b) are in their basic position and the mould halves (72a, 72b) are still not completely closed, so that at each spray pulse, both the inner mould face and also at least a part of the mouth ring connecting faces (74aa, 74ba) are sprayed.

2. Device according to Claim 1, characterised in that the nozzle part (12) is disposed in stationary fashion at such a location that it does not impede transfer of the mouth ring halves (74a, 74b) which happen to be carrying the hollow glass body (82″) out of their basic position to the transfer location.

3. Device according to Claim 1 or 2, characterised in that the nozzle part (12) is disposed in the vicinity of the end (76a) of a glass feed channel (76).

4. Device according to one of Claims 1 to 3, characterised in that the spray pulses (24′) of the first series follow on from one another at shorter intervals of time than the spray pulses (24) of the second series.

5. Device according to one of Claims 1 to 4, characterised in that the moment in time when the spray pulses (24, 24′) take place is adjustable in relation to the rate of working of the device.

6. Device according to one of Claims 1 to 5, characterised in that the frequency of the spray pulse sequence is adjustable.

7. Device according to one of Claims 1 to 6, characterised in that the quantity sprayed per spray pulse is adjustable.

8. Device according to one of Claims 1 to 7, characterised in that the nozzle part (12) is a single substance nozzle part, i.e. operates without any addition of pressurised gas.

9. Device according to one of Claims 1 to 8, characterised in that the nozzle part (12) is connected to a pressure generator in the form of a piston-cylinder assembly (32) which supplies only a single nozzle part (12).

10. Device according to one of Claims 1 to 9, characterised in that the nozzle part (12) is part of a spray head (10) and in that there is associated with the nozzle part (12) a nozzle occluding piston (16) which is subject to initial tension, this nozzle occluding piston (16) being capable of being moved into an open position by the application of the spray pressure applied by the piston cylinder assembly (32).

11. Device according to Claim 10, characterised in that constructed in the spray head (10), in advance of the nozzle part (12), there is a control chamber (14) which holds a part of the nozzle occluding piston (16) which is guided for displacement in the spray head (10), a free control space being left, and in that the nozzle occluding piston (16) comprises an occluding face (20) opposite a seating face (22) which is at the nozzle outlet on the same side as the control chamber, and in that the total cross-section of the nozzle occluding piston (16) is greater than its partial cross-section which is masked by the seating face (22).

12. Device according to Claim 1, characterised in that the nozzle occluding piston (16) carries a spray jet influencing needle (28) which penetrates the nozzle part (12).

13. Device according to one of Claims 9 to 12, characterised in that the piston-cylinder assembly (32) comprises a cylinder (34) connected by an intake valve (66), particularly a non-return valve, to a lubricating or separating agent tank, this cylinder possibly being connected to the control chamber (14) of the spray head (10) without any other valves being incorporated.

14. Device according to one of Claims 9 to 13, characterised in that the piston (36) is adjustable by an electromagnetic drive (44).

15. Device according to Claim 14, characterised in that the piston (36) is initially tensioned by spring force (58) into a first extreme position in which it is retracted from the cylinder (34) and is displaceable into the other extreme position in which it is drawn into the cylinder (34).

16. Device according to one of Claims 14 and 15, characterised in that the electromagnetic drive (44) is a direct current-operated plunger armature drive.

17. Device according to one of Claims 14 to 16, characterised in that the electromagnetic drive (44) can be subjected to power surges of adjustable length.

18. Device according to one of Claims 9 to 17, characterised in that the drive for the piston (36) is controlled by a control unit (52) common to a group of spray stations, particularly all spray stations.

19. Device according to one of Claims 9 to 18, characterised in that the piston-cylinder assembly (32) is adjusted to generate pressures of 100 to 1000 bars and preferably 300 to 700 bars.

20. Device according to one of Claims 1 to 19, characterised in that the relevant nozzle part (12) is adjusted to a cone shape.

21. Device according to Claim 20, characterised in that the spray cone is so adjusted that without changing the setting, it can bring about both adequate spraying of the closed mould cavity and also adequate spraying of the mouth ring connecting faces (74aa, 74ba).

22. Device according to one of Claims 1 and 3 to 21, characterised in that the nozzle part (12) is adjustable in its machine rhythm between a working position and a retracted position.

**Revendications**

1. Dispositif pour la fabrication de corps en verre creux, qui présentent un axe, un tronc de corps en verre creux et un col de corps en verre creux, ledit dispositif comprenant une cavité de moule qui présente un axe et une surface intérieure de moule avec une première partie correspondant au tronc du corps en verre creux et une deuxième partie correspondant au col du corps en verre creux.

la première partie de la surface intérieure de moule étant formée par deux demi-moules (72a, 72b), qui à une position de base se rejoignent par des faces respectives de séparation de moule (72c, 72d), en un plan de séparation de moule contenant l'axe de la cavité de moule,

la deuxième partie de la surface intérieure de moule étant formée par deux demi-bagues d'embouchure (74a, 74b) qui, à une position de base, se rejoignent par des faces respectives de séparation de bague d'embouchure (74c, 74d), en un plan de séparation de bague d'embouchure contenant l'axe de la cavité de moule, et qui s'appuient par des faces respectives de raccordement de bague d'embouchure (74aa, 74ba) contre des faces de raccordement de moule des demi-moules (72a, 72b), en un plan de raccordement sensiblement orthogonal à l'axe de la cavité de moule, les deux demi-moules (72a, 72b) définissant en outre, à leurs extrémités éloignées des demi-bagues d'embouchure (74a, 74b), un orifice d'introduction pour une bulle de verre (82),

l'orifice d'introduction pouvant être obturé par un corps de fermeture (84), une tige de soufflage (78) pouvant être introduite entre les demi-bagues d'embouchure (74a, 74b),

les demi-moules (72a, 72b) pouvant être écartés l'un de l'autre sensiblement perpendiculairement au plan de séparation du moule pour passer de leur position de base à une position ouverte, afin de former entre eux une fente permettant de sortir de la cavité de moule le corps de verre creux (82″) réalisé,

les demi-bagues d'embouchure (74a, 74b) pouvant, conjointement avec le corps de verre creux réalisé (82″), être déplacées de leur position de base à un poste de prise en charge en passant par ladite fente, et être en ce poste écartées l'une de l'autre sensiblement perpendiculairement au plan de séparation de la bague d'embouchure, passant ainsi à une position desserrée permettant de remettre le corps de verre creux (82″) à des moyens de prise en charge (90),

les demi-moules (72a, 72b) pouvant, à la suite du retour des demi-bagues d'embouchure (74a, 74b) à leur position de base, être eux-aussi ramenés à leur position de base, et

des moyens de pulvérisation (10) étant prévus, afin d'asperger la surface intérieure de moule d'un agent de lubrification et de séparation, caractérisé en ce que

une seule buse (12) est associée à la cavité de moule, en dehors de cette dernière, à proximité de l'axe de la cavité de moule, et du côté des demi-moules (72a, 72b) qui est tourné vers l'orifice d'introduction, buse qui sert tant à l'aspersion d'au moins une partie (72e, 72f) de la surface intérieure de moule qu'à l'aspersion d'au moins une partie des faces de raccordement de bague d'embouchure (74aa, 74ba),

la buse (12) étant reliée à un dispositif de commande (54), lequel soit

déclenche une première série de pulvérisations (24′) par la buse (12) une fois que les demi-moules (72a, 72b) et les demi-bagues d'embouchure (74a, 74b) sont à leur position de base, c'est-à-dire que la cavité de moule est fermée, de sorte que pour l'essentiel seule la surface intérieure du moule est aspergée, et déclenche une deuxième série de pulvérisations (24) une fois que les demi-bagues d'embouchure (74a, 74b) ont pris leur position de base mais alors que les demi-moules (72a, 72b) se trouvent encore à leur position ouverte, de sorte que pour l'essentiel seules les faces de raccordement de bague d'embouchure (74aa, 74ba) sont atteintes par les pulvérisations (24), soit

déclenche une unique série de pulvérisations (24) à chaque fois que les demi-bagues d'embouchure (74a,74b) se trouvent à leur position de base et que les demi-moules (72a, 72b) ne sont pas encore entièrement fermés, de telle sorte qu'à chaque pulvérisation, tant la surface intérieure du moule qu'au moins une partie des faces de raccordement de bague d'embouchure (74aa, 74ba) sont aspergées.

2. Dispositif selon la revendication 1, caractérisé en ce que la buse (12) est disposée fixe en un endroit tel qu'elle n'entrave pas le transfert des demi-bagues d'embouchure (74a, 74b) portant le corps de verre creux réalisé (82″) de leur position de base à leur poste de prise en charge.

3. Dispositif selon la revendication 1 ou 2, caractérisé en ce que la buse (12) est disposée à proximité de l'extrémité (76a) d'un canal d'amenée de verre (76).

4. Dispositif selon une des revendications 1 à 3, caractérisé en ce que les pulvérisations (24′) de la première série se succèdent à des intervalles de temps plus courts que les pulvérisations (24) de la deuxième série.

5. Dispositif selon une des revendications 1 à 4, caractérisé en ce que le moment des pulvérisations (24, 24′) peut être réglé par rapport au cycle de travail du dispositif.

6. Dispositif selon une des revendications 1 à 5, caractérisé en ce que la fréquence de la succession de pulvérisations est réglable.

7. Dispositif selon une des revendications 1 à 6, caractérisé en ce que la quantité pulvérisée par pulvérisation est réglable.

8. Dispositif selon une des revendications 1 à 7, caractérisé en ce que la buse (12) est une buse monosubstance, c'est-à-dire qui travaille sans addition de gaz sous pression.

9. Dispositif selon une des revendications 1 à 8, caractérisé en ce que la buse (12) est reliée à un générateur de pression sous la forme d'un ensemble cylindre-piston (32), qui n'alimente qu'une seule buse (12).

10. Dispositif selon une des revendications 1 à 9, caractérisé en ce que la buse (12) fait partie d'une tête de pulvérisation (10), et en ce qu'un piston de fermeture de buse (16) sous précontrainte est associé à la buse (12), ce piston de fermeture de buse (16) pouvant être amené en position ouverte en appliquant la pression de pulvérisation fournie par l'ensemble cylindre-piston (32).

11. Dispositif selon la revendication 10, caractérisé en ce qu'une chambre de commande (14) est configurée dans la tête de pulvérisation (10) avant la buse (12), chambre qui reçoit une partie du piston de fermeture de buse (16) guidé en coulissement dans la tête de pulvérisation (10), en laissant libre un espace de commande, en ce que ce piston de fermeture de buse (16) présente une face de fermeture (20) en vis-à-vis d'une face d'appui (22) prévue à la sortie de la buse côté chambre de commande, et en ce que la section totale du piston de fermeture de buse (16) est supérieure à sa section partielle recouverte par la face d'appui (22).

12. Dispositif selon la revendication 11, caractérisé en ce que le piston de fermeture de buse (16) porte un pointeau (28) traversant la buse (12) et agissant sur la forme de la pulvérisation.

13. Dispositif selon une des revendications 9 à 12, caractérisé en ce que l'ensemble cylindre-piston (32) présente un cylindre (34) relié à un réservoir d'agent de lubrification ou de séparation par l'intermédiaire d'une valve d'aspiration (66), et notamment d'un clapet antiretour, et en ce que ce cylindre est relié à la chambre de commande (14) de la tête de pulvérisation (10), éventuellement sans intercalage d'autres valves.

14. Dispositif selon une des revendications 9 à 13, caractérisé en ce que le piston (36) peut être déplacé au moyen d'un entraînement électromagnétique (44).

15. Dispositif selon la revendication 14, caractérisé en ce que le piston (36) est précontraint par force de ressort (58) à une première position finale où il est retiré hors du cylindre (34), et peut coulisser à l'autre position finale où il est rentré dans le cylindre (34).

16. Dispositif selon une des revendications 14 et 15, caractérisé en ce que l'entraînement électromagnétique (44) est un entraînement à noyau plongeur alimenté en courant continu.

17. Dispositif selon une des revendications 14 à 16, caractérisé en ce que l'entraînement électromagnétique (44) peut être sollicité par des impulsions électriques de longueur réglable.

18. Dispositif selon une des revendications 9 à 17, caractérisé en ce que l'entraînement pour le piston (36) est commandé par une unité de commande (52) commune à un groupe de postes de pulvérisation, et notamment de postes de pulvérisation différents.

19. Dispositif selon une des revendications 9 à 18, caractérisé en ce que l'ensemble cylindre-piston (32) est réglé pour fournir des pressions de 100 à 1000 bars, et de préférence de 300 à 700 bars.

20. Dispositif selon une des revendications 1 à 19, caractérisé en ce que chaque buse (12) est réglée pour produire un cône de pulvérisation.

21. Dispositif selon la revendication 20, caractérisé en ce que le cône de pulvérisation est réglé de telle sorte qu'il engendre, sans modification du réglage, tant une aspersion suffisante de la cavité de moule fermée qu'une aspersion suffisante des faces de raccordement de bague d'embouchure (74aa, 74ba).

22. Dispositif selon une des revendications 1 et 3 à 21, caractérisé en ce que la buse (12) peut être déplacée, au cours du cycle du dispositif, entre une position de travail et une position rentrée.

FIG.1a

# FIG.1b

FIG.1c

76

10

76a

82

80

72a,72b

72

86

88

74a,74b

78

79

74

# F I G.1d

76

76a

10

FIG.1e

84

82″

72

88

86

74

78

# FIG.1f

FIG.1g

# FIG.2a

# FIG. 2g

FIG.3